# EUROPEAN PATENT APPLICATION

(11) **EP 4 535 870 A1**
(43) Date of publication of application: **09.04.2025**
(21) Application number: 23823070.0
(22) Date of filing: 12.06.2023
(51) Int. Cl.: H04W 48/00, H04W 4/24

(54) **ACCESS CONTROL METHOD, CHARGING METHOD, APPARATUS, COMMUNICATION DEVICE AND STORAGE MEDIUM**

(30) Priority: 16.06.2022 CN 202210686731
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: CHEN, Ai, Beijing 100032 (CN); JIANG, Yi, Beijing 100032 (CN)
(74) Representative: Murgitroyd & Company
(86) International application number: PCT/CN2023/099631
(87) International publication number: WO 2023/241502

(57) **Abstract**

An access control method, a charging method, an apparatus, a communication device, and a readable storage medium are provided, which belong to the field of communication technology. The access control method in embodiments of the present disclosure includes: sending, by a first network element, a first request message to a second network element, where the first request message includes at least one NPN identifier and is used for requesting to update a number of UEs for each NPN identifier; and receiving a first response message from the second network element, where the first response message includes first indication information, and the first indication information is used for indicating whether the number of UEs for each NPN identifier reaches the corresponding first value.

## Description

### CROSS-REFERENCE TO RELATED APPLICATION

The present application claims a priority to the Chinese patent application No. 202210686731.0 filed in China on June 16, 2022, a disclosure of which is incorporated herein by reference in its entirety.

### TECHNICAL FIELD

The present disclosure belongs to the field of communication technology, and specifically to an access control method, a charging method, an apparatus, a communication device, and a readable storage medium.

### BACKGROUND

In the related art, a non-public network (NPN), for example, a public network integrated (PNI)-NPN may implement user access region control through a closed access group (CAG). Before the CAG is introduced, network access control can only reach cell granularity. After the CAG function is introduced, because one cell can support a plurality of CAGs, finer-grained control can be provided based on the CAGs. Therefore, how to implement access control of an NPN is an urgent problem to be solved.

### SUMMARY

An object of embodiments of the present disclosure is to provide an access control method, a charging method, an apparatus, a communication device, and a readable storage medium, to solve the problem of how to implement access control of an NPN.

To resolve the foregoing technical problem, the present disclosure is implemented in the following manner.

In a first aspect, an access control method is provided, performed by a first network element, including:
sending a first request message to a second network element, where the first request message includes at least one NPN identifier and is used for requesting to update a number of UEs for each NPN identifier; and
receiving a first response message from the second network element, where the first response message includes first indication information, and the first indication information is used for indicating whether the number of UEs for each NPN identifier reaches a corresponding first value.

In a second aspect, an access control method is provided, performed by a second network element, including:
receiving a first request message from a first network element, where the first request message includes at least one NPN identifier and is used for requesting to update a number of UEs for each NPN identifier;
checking whether the number of UEs for each NPN identifier reaches a corresponding first value, and updating the number of UEs for an NPN identifier that does not reach the corresponding first value; and
sending a first response message to the first network element, where the first response message includes first indication information, and the first indication information is used for indicating whether the number of UEs for each NPN identifier reaches the corresponding first value.

In a third aspect, a charging method is provided, performed by a second network element, including:
when a number of UEs for a first NPN identifier reaches a corresponding first value or second value, sending a second request message to a fourth network element, where the second request message is used for reporting the number of UEs for the first NPN identifier, the fourth network element performs charging based on the number of UEs for the first NPN identifier, the first value is a maximum number of UEs for the first NPN identifier, the first value is greater than the second value, and the second value is any one of "number of UEs" thresholds for the first NPN identifier; and
receiving a second response message from the fourth network element.

In a fourth aspect, a charging method is provided, performed by a fourth network element, including:
when a number of UEs for a first NPN identifier reaches a corresponding first value or second value, receiving a second request message from a second network element, where the second request message is used for reporting the number of UEs for the first NPN identifier, the fourth network element performs charging based on the number of UEs for the first NPN identifier, the first value is a maximum number of UEs for the first NPN identifier, the first value is greater than the second value, and the second value is any one of "number of UEs" thresholds for the first NPN identifier; and
sending a second response message to the second network element.

In a fifth aspect, an access control apparatus is provided, applied to a first network element, including:
a first sending module, configured to send a first request message to a second network element, where the first request message includes at least one NPN identifier and is used for requesting to update a number of UEs for each NPN identifier; and
a first receiving module, configured to receive a first response message from the second network element, where the first response message includes first indication information, and the first indication information is used for indicating whether the number of UEs for each NPN identifier reaches a corresponding first value.

In a sixth aspect, an access control apparatus is provided, applied to a second network element, including:
a third receiving module, configured to receive a first request message from a first network element, where the first request message includes at least one NPN identifier and is used for requesting to update a number of UEs for each NPN identifier;
a processing module, configured to check whether the number of UEs for each NPN identifier reaches a corresponding first value, and update the number of UEs for an NPN identifier that does not reach the corresponding first value; and
a third sending module, configured to send a first response message to the first network element, where the first response message includes first indication information, and the first indication information is used for indicating whether the number of UEs for each NPN identifier reaches the corresponding first value.

In a seventh aspect, a charging apparatus is provided, applied to a second network element, including:
a fifth sending module, configured to: when a number of UEs for a first NPN identifier reaches a corresponding first value or second value, send a second request message to a fourth network element, where the second request message is used for reporting the number of UEs for the first NPN identifier, the fourth network element performs charging based on the number of UEs for the first NPN identifier, the first value is a maximum number of UEs for the first NPN identifier, the first value is greater than the second value, and the second value is any one of "number of UEs" thresholds for the first NPN identifier; and
a fifth receiving module, configured to receive a second response message from the fourth network element.

In an eighth aspect, a charging apparatus is provided, applied to a fourth network element, including:
a sixth receiving module, configured to: when a number of UEs for a first NPN identifier reaches a corresponding first value or second value, receive a second request message from a second network element, where the second request message is used for reporting the number of UEs for the first NPN identifier, the fourth network element performs charging based on the number of UEs for the first NPN identifier, the first value is a maximum number of UEs for the first NPN identifier, the first value is greater than the second value, and the second value is any one of "number of UEs" thresholds for the first NPN identifier; and
a sixth sending module, configured to send a second response message to the second network element.

In a ninth aspect, a communication device is provided, the communication device including a processor, a memory, and a program or instructions stored in the memory and executable by the processor, where the program or instructions, when being executed by the processor, implement the steps of the method according to the first aspect, or the steps of the method according to the second aspect, or the steps of the method according to the third aspect, or the steps of the method according to the fourth aspect.

In a tenth aspect, a readable storage medium is provided, where the readable storage medium stores a program or instructions, and the program or instructions, when being executed by a processor, implement the steps of the method according to the first aspect, or the steps of the method according to the second aspect, or the steps of the method according to the third aspect, or the steps of the method according to the fourth aspect.

In the embodiments of the present disclosure, a first network element may send a first request message to a second network element, where the first request message includes at least one NPN identifier and is used for requesting to update a number of UEs for each NPN identifier, and receive a first response message from the second network element, where the first response message includes first indication information, and the first indication information is used for indicating whether the number of UEs for each NPN identifier reaches the corresponding first value. In this way, access control can be implemented per NPN identifier by indicating whether a number of UEs for each NPN identifier reaches a corresponding first value, and access control can be performed according to a limit of user access resources, thereby meeting a finer grained control requirement of a network.

### BRIEF DESCRIPTION OF THE DRAWINGS

Fig. 1 is a flowchart of an access control method according to an embodiment of the present disclosure;
Fig. 2 is a flowchart of another access control method according to an embodiment of the present disclosure;
Fig. 3 is a flowchart of a charging method according to an embodiment of the present disclosure;
Fig. 4 is a flowchart of another charging method according to an embodiment of the present disclosure;
Fig. 5 is a first schematic diagram of an access control and charging process according to an embodiment of the present disclosure;
Fig. 6 is a second schematic diagram of an access control and charging process according to an embodiment of the present disclosure;
Fig. 7 is a schematic structural diagram of an access control apparatus according to an embodiment of the present disclosure;
Fig. 8 is a schematic structural diagram of another access control apparatus according to an embodiment of the present disclosure;
Fig. 9 is a schematic structural diagram of a charging apparatus according to an embodiment of the present disclosure;
Fig. 10 is a schematic structural diagram of another charging apparatus according to an embodiment of the present disclosure; and
Fig. 11 is a schematic structural diagram of a communication device according to an embodiment of the present disclosure.

### DETAILED DESCRIPTION

The following clearly and completely describes the technical solutions in the embodiments of the present disclosure with reference to the accompanying drawings in the embodiments of the present disclosure. Apparently, the described embodiments are only some embodiments of the present disclosure rather than all the embodiments. All other embodiments obtained by persons of ordinary skill in the art based on the embodiments of the present disclosure without creative efforts fall within the protection scope of the present disclosure.

The terms such as "first" and "second" in the specification and claims of the present disclosure are only used to distinguish between similar objects, but are not used to describe a specific order or time sequence. It should be understood that the data thus used are interchangeable in appropriate circumstances and that embodiments of the present disclosure can be implemented in other sequences than those illustrated or described. In addition, the objects distinguished by "first", "second", and the like are usually of one type, and a number of the objects is not limited. For example, one or more first objects may be provided. In addition, the term "and/or" in the description and claims represents at least one of associated objects. The character "/" generally indicates an "or" relationship between the contextual objects.

In embodiments of the present disclosure, two types of NPNs (NPNs) are included. One type is a stand-alone NPN (SNPN). The SNPN usually uses a dedicated wireless network or a core network. The other type is a PNI-NPN. Depending on a public land mobile network of an operator, the PNI-NPN can fully utilize network resources of the operator to provide an industry customer with a quick dedicated network service, for example, a 5^{th} generation mobile communication technology (5G).

The PNI-NPN may implement user access region control through a CAG. The CAG may also be described as a closed access group. Before the CAG is introduced, network access control can only reach cell granularity. After the CAG function is introduced, because one cell can support a plurality of CAGs, an NPN can provide finer-grained control based on the CAGs. The CAG may also be referred to as a closed access group.

PNI-NPN users and PLMN users share one network, and the PNI-NPN users may have users of different vertical industries (private networks). Therefore, it is necessary to distinctively collect statistics of network resource usage of different users, thereby implementing network resource usage-based access control and charging.

Optionally, scenarios to which the embodiments of the present disclosure are applicable include, but not limited to, a 5G industry dedicated network, a 6^{th} generation mobile communication technology (6G) industry dedicated network, and the like.

An access control method, a charging method, an apparatus, a communication device, and a readable storage medium provided in the embodiments of the present disclosure are described below in detail with reference to the accompanying drawings and through specific embodiments and application scenarios thereof.

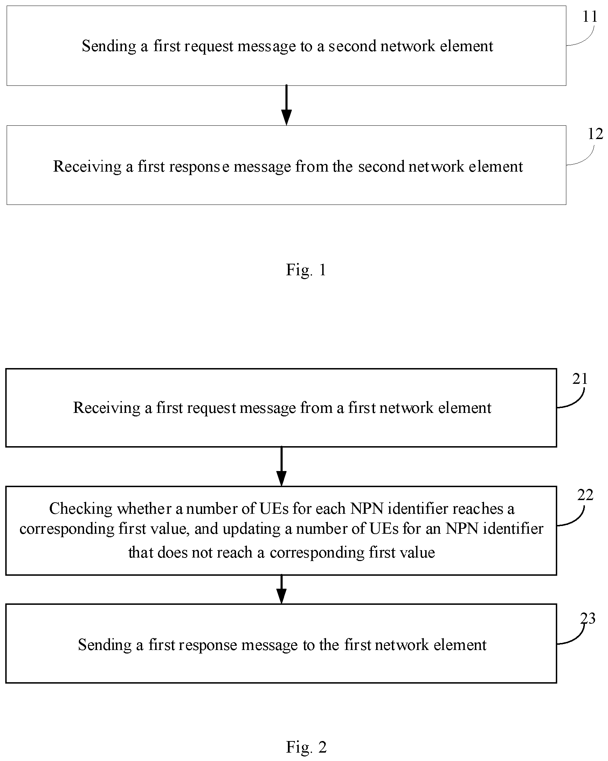

Refer to Fig. 1. Fig. 1 is a flowchart of an access control method according to an embodiment of the present disclosure. The method is performed by a first network element. The first network element may include, but not limited to, an access and mobility management function (AMF), and the like. As shown in Fig. 1, the method includes the following steps.

A step 11 includes: sending a first request message to a second network element.

In this embodiment, the first request message includes at least one NPN identifier and is used for requesting to update a number of UEs for each NPN identifier. The at least one NPN identifier may be understood as one or more NPN identifiers. The NPN identifier is an identifier of an NPN that allows access.

Optionally, the first request message may further include at least one of the following: a terminal identifier (for example, user equipment (UE) identifier (ID)), or second indication information. The second indication information is used for indicating to increase or decrease the number of UEs for each NPN identifier, to allow the second network element to update a number of UEs for a corresponding NPN identifier. The terminal identifier is used for indicating a terminal that initiates a registration request or a deregistration request.

In some embodiments, the NPN is optionally an SNPN or is optionally a PNI-NPN.

In some embodiments, the NPN has a CAG function and may be identified by a CAG identifier.

In some embodiments, the NPN may be identified by a public land mobile network (PLMN) ID and/or a network ID (NID).

In some embodiments, the second network element may include, but not limited to, an NPN admission control function (NPNACF), a network slice admission control function (NSACF), and the like. For example, the AMF may send the first request message to the NPNACF or NSACF.

It needs to be noted that the number of UEs for each NPN identifier may be understood as a number of terminals of an NPN corresponding to the NPN identifier, or a number of terminals registered with an NPN corresponding to the NPN identifier, or a number of terminals that use an NPN corresponding to the NPN identifier at the same time.

A step 12 includes: receiving a first response message from the second network element.

In this embodiment, the first response message includes first indication information, and the first indication information is used for indicating whether the number of UEs for each NPN identifier reaches the corresponding first value. The first value may be preset based on actual requirements, and/or obtained from an operation administration and maintenance (OAM) unit. The first value may be a "number of UEs" threshold for a corresponding NPN identifier. Optionally, the first value is a maximum number of UEs for a corresponding NPN identifier. To be specific, the first indication information is used for indicating whether the number of UEs for each NPN identifier reaches a corresponding maximum number of UEs, to use the maximum number of UEs (for example, a maximum number of registered terminals) as a limit of network access resources. The maximum numbers of UEs and/or "number of UEs" thresholds for different NPN identifiers may be different or may be the same.

In some embodiments, the first request message is a "number of UEs" update request message, and correspondingly, the first response message is a "number of UEs" update response message.

In the access control method in the embodiments of the present disclosure, a first network element may send a first request message to a second network element, where the first request message includes at least one NPN identifier and is used for requesting to update a number of UEs for the at least one NPN identifier, and receive a first response message from the second network element, where the first response message includes first indication information, and the first indication information is used for indicating whether the number of UEs for each NPN identifier reaches the corresponding first value. In this way, access control can be implemented per NPN identifier (for example, the CAG identifier) by indicating whether a number of UEs for each NPN identifier reaches a corresponding first value, and access control can be performed according to a limit of user access resources, thereby meeting a finer grained control requirement of a network.

Optionally, the at least one NPN identifier may include at least one of the following:
one or more CAG identifiers;
one or more NIDs; or
one or more PLMN IDs.

For example, the at least one NPN identifier includes one or more CAG identifiers, and the first request message includes one or more CAG identifiers, to request to update a number of UEs for the one or more CAG identifiers. Alternatively, the at least one NPN identifier includes one or more PLMN IDs and/or NIDs, to request to update a number of UEs for an NPN corresponding to the PLMN ID and/or NID.

Optionally, each NPN identifier in the at least one NPN identifier may be determined by the first network element from terminal subscription data (for example, an allowed CAG list) obtained from a third network element, and/or an NPN identifier list (for example, a cell CAG list) that is obtained from a radio access network (RAN) and is supported by a cell. The third network element may include, but not limited to, a unified data repository (UDR) or the like. For example, the NPN identifier (for example, the CAG identifier) in the first request message may be an NPN identifier determined by the AMF from the terminal subscription data obtained from the UDR.

In the embodiments of the present disclosure, the first network element may send the first request message to the second network element based on the registration request or the deregistration request initiated by the terminal. Before sending the first request message to the second network element, the first network element may first receive a registration request message or a deregistration request message from the terminal, and then, in a case that it is determined that the terminal is allowed to access the NPN, send the first request message to the second network element, to request to update the number of UEs for each NPN identifier.

Optionally, in a case that a registration request message is received from the terminal, after the receiving the first response message from the second network element, in a case that the first indication information indicates that the numbers of UEs for some or all NPN identifiers of the at least one NPN identifier do not reach corresponding first values, the first network element sends a registration accept message to the terminal. Alternatively, in a case that the first indication information indicates that a number of UEs for each NPN identifier reaches a corresponding first value, the first network element sends a registration reject message to the terminal. In other words, if numbers of UEs for no NPN identifier or for only some NPN identifiers reach corresponding first values (for example, maximum numbers of terminals), the registration accept message is sent to the terminal, to accept the registration request initiated by the terminal. If numbers of UEs for all NPN identifiers reach corresponding first values (for example, maximum numbers of terminals), the registration reject message is sent to the terminal, to reject the registration request initiated by the terminal.

Optionally, in a case that a number of UEs for each NPN identifier reaches a corresponding first value (for example, a maximum number of UEs), the first network element may reject a subsequent registration request message for an NPN corresponding to each NPN identifier. In other words, the first network element does not send the first request message to the second network element, and directly rejects subsequent new registration request messages that only contain these NPN identifiers.

Optionally, in a case that a number of UEs for each NPN identifier reaches a corresponding first value (for example, a maximum number of UEs), the first response message may further include notification information, and the notification information is used for notifying the first network element to reject a subsequent registration request message for an NPN corresponding to each NPN identifier, in other words, notifying the first network element to subsequently no longer accept subsequent registration request messages that only contain these NPN identifiers. In other words, the first network element does not send the first request message to the second network element, and directly rejects subsequent new registration request messages that only contain these NPN identifiers.

Refer to Fig. 2. Fig. 2 is a flowchart of an access control method according to an embodiment of the present disclosure. The method is performed by a second network element. The second network element may include, but not limited to, an NPNACF, an NSACF, and the like. As shown in Fig. 2, the method includes the following steps.

A step 21 includes: receiving a first request message from a first network element.

In this embodiment, the first request message includes at least one NPN identifier and is used for requesting to update a number of UEs for each NPN identifier. The at least one NPN identifier may be understood as one or more NPN identifiers. The NPN identifier is an identifier of an NPN that allows access.

Optionally, the first request message may further include at least one of the following: a terminal identifier (for example, UE ID), or second indication information. The second indication information is used for indicating to increase or decrease the number of UEs for each NPN identifier, to allow the second network element to update a number of UEs for a corresponding NPN identifier. The terminal identifier is used for indicating a terminal that initiates a registration request or a deregistration request.

In some embodiments, the NPN is optionally an SNPN or is optionally a PNI-NPN.

In some embodiments, the NPN has a CAG function and may be identified by a CAG identifier.

In some embodiments, the NPN may be identified by a PLMN ID and/or a NID.

It needs to be noted that the number of UEs for each NPN identifier may be understood as a number of terminals of an NPN corresponding to the NPN identifier, or a number of terminals registered with an NPN corresponding to the NPN identifier, or a number of terminals that use an NPN corresponding to the NPN identifier at the same time.

A step 22 includes: checking whether a number of UEs for each NPN identifier reaches a corresponding first value, and updating the number of UEs for an NPN identifier that does not reach the corresponding first value

In this embodiment, the first value may be preset based on actual requirements, and/or obtained from an OAM unit. The first value may be a "number of UEs" threshold for a corresponding NPN identifier. Optionally, the first value is a maximum number of UEs for a corresponding NPN identifier, to use the maximum number of UEs (for example, a maximum number of registered terminals) as a limit of network access resources.

A step 23 includes: sending a first response message to the first network element.

In this embodiment, the first response message includes first indication information, and the first indication information is used for indicating whether the number of UEs for each NPN identifier reaches the corresponding first value. For example, when the first value is a maximum number of UEs for a corresponding NPN identifier, the first indication information is used for indicating whether the number of UEs for each NPN identifier reaches a corresponding maximum number of UEs.

Optionally, in a case that a number of UEs for each NPN identifier reaches a corresponding first value (for example, a maximum number of UEs), the first response message may further include notification information, and the notification information is used for notifying the first network element to reject a subsequent registration request message for an NPN corresponding to each NPN identifier, in other words, notifying the first network element to subsequently no longer accept subsequent registration request messages that only contain these NPN identifiers. In other words, the first network element does not send the first request message to the second network element, and directly rejects subsequent new registration request messages that only contain these NPN identifiers.

In some embodiments, the first request message is a "number of UEs" update request message, and correspondingly, the first response message is a "number of UEs" update response message.

In this way, access control can be implemented per NPN identifier by indicating whether a number of UEs for each NPN identifier reaches a corresponding first value, and access control can be performed according to a limit of user access resources, thereby meeting a finer grained control requirement of a network.

Optionally, the at least one NPN identifier may include at least one of the following:
one or more CAG identifiers;
one or more NIDs; or
one or more PLMN IDs.

Optionally, charging may be performed based on access resources in this embodiment. When a number of UEs for a first NPN identifier reaches a corresponding first value or second value, a second request message is sent to a fourth network element, where the second request message is used for reporting the number of UEs for the first NPN identifier, and the fourth network element performs charging based on the number of UEs for the first NPN identifier. The number of UEs for the first NPN identifier may be a number of terminals using or being registered with an NPN corresponding to the first NPN identifier. The first NPN identifier is an identifier of any NPN that allows a terminal to access. The first value is a maximum number of UEs for the first NPN identifier. The first value is greater than the second value, and the second value is any one of "number of UEs" thresholds for the first NPN identifier. In other words, the second value may be a different "number of UEs" threshold. The charging is not limited to account, rating control, and the like. Subsequently, the second network element may receive a second response message from the fourth network element. The second response message may include a result indication of a success or a failure, or the like.

In other words, when a number of UEs (for example, a number of registered terminals) for an NPN identifier reaches a corresponding "number of UEs" threshold or maximum number of UEs, the second network element may send a second request message to the fourth network element, to report a number of UEs for the NPN identifier, so that the fourth network element performs charging based on the number of UEs for the NPN identifier, and receive the second response message from the fourth network element. The number of UEs for the NPN identifier reaching the corresponding "number of UEs" threshold may be that the number of UEs for the NPN identifier is increased to the corresponding "number of UEs" threshold, or the number of UEs for the NPN identifier is decreased to the corresponding "number of UEs" threshold. The number of UEs for the NPN identifier reaching the corresponding maximum number of UEs is that the number of UEs for the NPN identifier is increased to the corresponding maximum number of UEs. In this way, the number of UEs may be used as a determining basis for usage of network access resources to implement charging based on a number of terminals accessing a network. In addition, when a plurality of "number of UEs" thresholds are set, level charging for usage of user access resources can be implemented, to provide more options for industry customers.

In some embodiments, the fourth network element may directly perform charging based on the received second request message and level information.

In some other embodiments, the fourth network element may complete charging through a charging system, for example, may transparently transmit the received second request message to a charging system, so that the charging system performs charging based on the received second request message and the level information. The charging system may include, but not limited to, a converged charging system (CCS), or the like.

In some embodiments, the second request message may be a charging data request, and may be sent by the second network element by calling a charging service (for example, a converged charging service, for example, Nchf_NPNConvergedCharging).

For example, three "number of UEs" threshold, namely, a threshold 1, a threshold 2, and a threshold 3, are set, and the threshold 1 < threshold 2 < the threshold 3 < the maximum number of UEs. When a number of UEs for a corresponding NPN identifier is increased to the threshold 1 based on a registration request, the second network element may initiate a charging request to the fourth network element, to implement charging of a corresponding level based on the number of UEs. When a number of UEs for a corresponding NPN identifier is increased to the threshold 2 based on a registration request, the second network element may initiate a charging request to the fourth network element, to implement charging of a corresponding level based on the number of UEs. When a number of UEs for a corresponding NPN identifier is increased to the threshold 3 based on a registration request, the second network element may initiate a charging request to the fourth network element, to implement charging of a corresponding level based on the number of UEs. When a number of UEs for a corresponding NPN identifier is increased to the maximum number of UEs based on a registration request, the second network element may initiate a charging request to the fourth network element, to implement charging of a corresponding level based on the number of UEs. Alternatively, when a number of UEs for a corresponding NPN identifier is decreased to the threshold 3 based on a deregistration request, the second network element may initiate a charging request to the fourth network element, to implement charging of a corresponding level based on the number of UEs. When a number of UEs for a corresponding NPN identifier is decreased to the threshold 2 based on a deregistration request, the second network element may initiate a charging request to the fourth network element, to implement charging of a corresponding level based on the number of UEs. When a number of UEs for a corresponding NPN identifier is decreased to the threshold 1 based on a deregistration request, the second network element may initiate a charging request to the fourth network element, to implement charging of a corresponding level based on the number of UEs.

It needs to be noted that the foregoing examples are described by using three "number of UEs" thresholds as an example. However, this embodiment is not limited thereto. Two "number of UEs" threshold, four "number of UEs" threshold, or the like may be set, and corresponding charging methods are the same. Details are not described again herein.

Optionally, the second request message may include at least one of the following: a first NPN identifier, or a number of UEs for the first NPN identifier. For example, the first NPN identifier is optionally a CAG identifier, or the first NPN identifier is optionally a PLMN ID and/or NID.

In some embodiments, the charging may include, but not limited to, account, rating control, and the like.

In some embodiments, the second request message may be a converged charging request message, and correspondingly, the second response message is a converged charging response message. Alternatively, the second request message may be a charging data request message, and correspondingly, the second response message is a charging data response message. Alternatively, the second request message may be a charging request message, and correspondingly, the second response message is a charging response message.

In some embodiments, the fourth network element may include, but not limited to, a charging function (CHF), or the like. For example, when a number of UEs (for example, a number of registered terminals) for any NPN identifier reaches a corresponding "number of UEs" threshold or maximum number of UEs (for example, increased to the corresponding "number of UEs" threshold or maximum number of UEs, or reduced to the corresponding "number of UEs" threshold), the NPNACF may send a charging data request message to the CHF, to report the number of UEs (i.e., a number of terminals using or being registered with a corresponding NPN) for the NPN identifier, so that the CHF performs charging based on the number of UEs for the NPN identifier, and receive a charging data response message from the CHF.

In the embodiments of the present disclosure, the second network element may configure a maximum number of UEs for each NPN identifier and/or at least one "number of UEs" threshold under the maximum number of UEs, and/or the second network element may obtain, according to each NPN identifier, a maximum number of UEs for each NPN identifier and/or at least one "number of UEs" threshold under the maximum number of UEs from a fifth network element. Maximum numbers of terminals and/or "number of UEs" thresholds for different NPN identifiers may be different or may be the same. In this way, the maximum number of UEs for each NPN identifier and/or at least one "number of UEs" threshold may be obtained, to perform access control and/or charging based on a number of terminals accessing a network.

In some embodiments, the fifth network element may include, but not limited to, an OAM unit. For example, the NPNACF may statically configure a maximum number of UEs for an NPN identifier and/or a set of "number of UEs" thresholds under the maximum number of UEs, or may obtain, from the OAM unit according to an NPN identifier, a maximum number of UEs for the NPN identifier and/or a set of "number of UEs" thresholds under the maximum number of UEs.

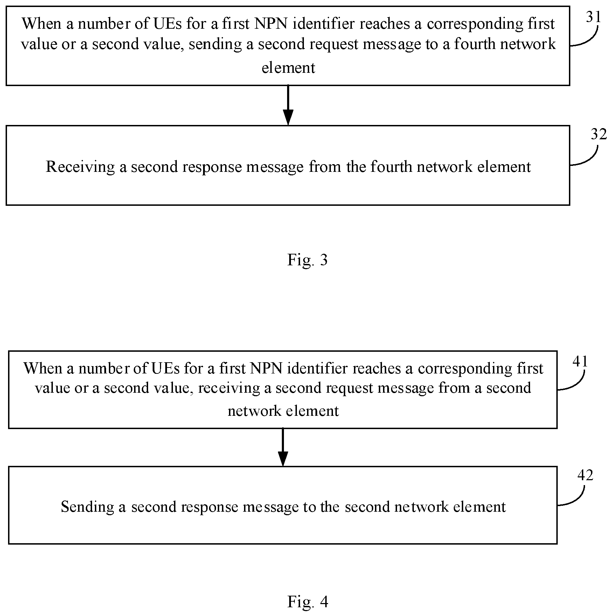

Refer to Fig. 3. Fig. 3 is a flowchart of a charging method according to an embodiment of the present disclosure. The method is performed by a second network element. The second network element may include, but not limited to, an NPNACF, an NSACF, and the like. As shown in Fig. 3, the method includes the following steps.

A step 31 includes: when a number of UEs for a first NPN identifier reaches a corresponding first value or second value, sending a second request message to a fourth network element.

In this embodiment, the second request message is used for reporting the number of UEs for the first NPN identifier, and the fourth network element performs charging based on the number of UEs for the first NPN identifier. The number of UEs for the first NPN identifier may be a number of terminals using or being registered with an NPN corresponding to the first NPN identifier. The first NPN identifier is an identifier of any NPN that allows a terminal to access. The first value is a maximum number of UEs for the first NPN identifier. The first value is greater than the second value, and the second value is any one of "number of UEs" thresholds for the first NPN identifier. In other words, the second value may be a different "number of UEs" threshold.

In some embodiments, the charging may include, but not limited to, account, rating control, and the like.

In some embodiments, the second request message may be a charging data request, and may be sent by the second network element by calling a charging service (for example, a converged charging service, for example, Nchf_NPNConvergedCharging).

A step 32 includes: receiving a second response message from the fourth network element.

In this embodiment, the second response message may include a result indication of a success or a failure, or the like. In other words, when a number of UEs (for example, a number of registered terminals) for an NPN identifier reaches a corresponding "number of UEs" threshold or maximum number of UEs, the second network element may send a second request message to the fourth network element, to report a number of UEs for the NPN identifier, so that the fourth network element performs charging based on the number of UEs for the NPN identifier, and receive the second response message from the fourth network element. The number of UEs for the NPN identifier reaching the corresponding "number of UEs" threshold may be that the number of UEs for the NPN identifier is increased to the corresponding "number of UEs" threshold, or the number of UEs for the NPN identifier is decreased to the corresponding "number of UEs" threshold. The number of UEs for the NPN identifier reaching the corresponding maximum number of UEs is that the number of UEs for the NPN identifier is increased to the corresponding maximum number of UEs. In this way, the number of UEs may be used as a determining basis for usage of network access resources to implement charging based on a number of terminals accessing a network. In addition, when a plurality of "number of UEs" thresholds are set, level charging for usage of user access resources can be implemented, to provide more options for industry customers. Further, charging for a (maximum) number of registered terminals registered by an industry user of an NPN in the network can be implemented. If the (maximum) number of registered terminals promised in a plan is exceeded, the industry user may be recommended to order a plan with a higher fee and a larger number of registered terminals, to implement an increase in income.

In some embodiments, the fourth network element may directly perform charging based on the received second request message and level information.

In some other embodiments, the fourth network element may complete charging through a charging system, for example, may transparently transmit the received second request message to the charging system, so that the charging system performs charging based on the received second request message and the level information. The charging system may include, but not limited to, a CCS, or the like.

For example, three "number of UEs" threshold, namely, a threshold 1, a threshold 2, and a threshold 3, are set, and the threshold 1 < threshold 2 < the threshold 3 < the maximum number of UEs. When a number of UEs for a corresponding NPN identifier is increased to the threshold 1 based on a registration request, the second network element may initiate a charging request to the fourth network element, to implement charging of a corresponding level based on the number of UEs. When a number of UEs for a corresponding NPN identifier is increased to the threshold 2 based on a registration request, the second network element may initiate a charging request to the fourth network element, to implement charging of a corresponding level based on the number of UEs. When a number of UEs for a corresponding NPN identifier is increased to the threshold 3 based on a registration request, the second network element may initiate a charging request to the fourth network element, to implement charging of a corresponding level based on the number of UEs. When a number of UEs for a corresponding NPN identifier is increased to the maximum number of UEs based on a registration request, the second network element may initiate a charging request to the fourth network element, to implement charging of a corresponding level based on the number of UEs. Alternatively, when a number of UEs for a corresponding NPN identifier is decreased to the threshold 3 based on a deregistration request, the second network element may initiate a charging request to the fourth network element, to implement charging of a corresponding level based on the number of UEs. When a number of UEs for a corresponding NPN identifier is decreased to the threshold 2 based on a deregistration request, the second network element may initiate a charging request to the fourth network element, to implement charging of a corresponding level based on the number of UEs. When a number of UEs for a corresponding NPN identifier is decreased to the threshold 1 based on a deregistration request, the second network element may initiate a charging request to the fourth network element, to implement charging of a corresponding level based on the number of UEs.

It needs to be noted that the foregoing examples are described by using three "number of UEs" thresholds as an example. However, this embodiment is not limited thereto. Two "number of UEs" threshold, four "number of UEs" threshold, or the like may be set, and corresponding charging methods are the same. Details are not described again herein.

Optionally, the second request message may include at least one of the following: a first NPN identifier, or a number of UEs for the first NPN identifier. For example, the first NPN identifier is optionally a CAG identifier, or the first NPN identifier is optionally a PLMN ID and/or NID.

In some embodiments, the second request message may be a converged charging request message, and correspondingly, the second response message is a converged charging response message. Alternatively, the second request message may be a charging data request message, and correspondingly, the second response message is a charging data response message. Alternatively, the second request message may be a charging request message, and correspondingly, the second response message is a charging response message.

In some embodiments, the fourth network element may include, but not limited to, a CHF, or the like. For example, when a number of UEs (for example, a number of registered terminals) for any NPN identifier reaches a corresponding "number of UEs" threshold or maximum number of UEs (for example, increased to the corresponding "number of UEs" threshold or maximum number of UEs, or reduced to the corresponding "number of UEs" threshold), the NPNACF may send a charging data request message to the CHF, to report the number of UEs for the NPN identifier, so that the CHF performs charging based on the number of UEs for the NPN identifier, and receive a charging data response message from the CHF.

In the embodiments of the present disclosure, the second network element may configure a maximum number of UEs for each NPN identifier and/or at least one "number of UEs" threshold under the maximum number of UEs, and/or the second network element may obtain, according to each NPN identifier, a maximum number of UEs for each NPN identifier and/or at least one "number of UEs" threshold under the maximum number of UEs from a fifth network element. Maximum numbers of terminals and/or "number of UEs" thresholds for different NPN identifiers may be different or may be the same. In this way, the maximum number of UEs for each NPN identifier and/or at least one "number of UEs" threshold may be obtained, to perform access control and/or charging based on a number of terminals accessing a network.

In some embodiments, the fifth network element may include, but not limited to, an OAM unit, or the like. For example, the NPNACF may statically configure a maximum number of UEs for an NPN identifier and/or a set of "number of UEs" thresholds under the maximum number of UEs, or may obtain, from the OAM unit according to an NPN identifier, a maximum number of UEs for the NPN identifier and/or a set of "number of UEs" thresholds under the maximum number of UEs.

Refer to Fig. 4. Fig. 4 is a flowchart of a charging method according to an embodiment of the present disclosure. The method is performed by a fourth network element. The fourth network element may include, but not limited to, a CHF, and the like. As shown in Fig. 4, the method includes the following steps.

A step 41 includes: when a number of UEs for a first NPN identifier reaches a corresponding first value or a second value, receiving a second request message from a second network element.

In this embodiment, the second request message is used for reporting the number of UEs for the first NPN identifier, and the fourth network element performs charging based on the number of UEs for the first NPN identifier. The number of UEs for the first NPN identifier may be a number of terminals using or being registered with an NPN corresponding to the first NPN identifier. The first NPN identifier is an identifier of any NPN that allows a terminal to access. The first value is a maximum number of UEs for the first NPN identifier. The first value is greater than the second value, and the second value is any one of "number of UEs" thresholds for the first NPN identifier. In other words, the second value may be a different "number of UEs" threshold.

In some embodiments, the charging may include, but not limited to, account, rating control, and the like.

In some embodiments, the fourth network element may directly perform charging based on the received second request message and level information.

In some other embodiments, the fourth network element may complete charging through a charging system, for example, may transparently transmit the received second request message to the charging system, so that the charging system performs charging based on the received second request message and the level information. The charging system may include, but not limited to, a CCS, or the like.

A step 42 includes: sending a second response message to the second network element.

In this embodiment, the second response message may include a result indication of a success or a failure, or the like. In other words, when a number of UEs (for example, a number of registered terminals) for an NPN identifier reaches a corresponding "number of UEs" threshold or maximum number of UEs, the fourth network element may receive the second request from the second network element, to perform charging based on a number of UEs for the NPN identifier, and send the second response message to the second network element. In this way, the number of UEs may be used as a determining basis for usage of network access resources to implement charging based on a number of terminals accessing a network. In addition, when a plurality of "number of UEs" thresholds are set, level charging for usage of user access resources can be implemented, to provide more options for industry customers.

Optionally, the second request message may include at least one of the following: a first NPN identifier, or a number of UEs for the first NPN identifier. For example, the first NPN identifier is optionally a CAG identifier, or the first NPN identifier is optionally a PLMN ID and/or NID.

In some embodiments, the second request message may be a charging data request message, and correspondingly, the second response message is a charging data response message. For example, when a number of UEs (for example, a number of registered terminals) for any NPN identifier reaches a corresponding "number of UEs" threshold or maximum number of UEs (for example, increased to the corresponding "number of UEs" threshold or maximum number of UEs, or reduced to the corresponding "number of UEs" threshold), the NPNACF may send a charging data request message to the CHF, to report the number of UEs for the NPN identifier, so that the CHF performs charging based on the number of UEs for the NPN identifier, and receive a charging data response message from the CHF.

In the embodiments of the present disclosure, the fourth network element may configure a maximum number of UEs for each NPN identifier and/or at least one "number of UEs" threshold under the maximum number of UEs, and/or the fourth network element may obtain, according to each NPN identifier, a maximum number of UEs for each NPN identifier and/or at least one "number of UEs" threshold under the maximum number of UEs from a fifth network element. Maximum numbers of terminals and/or "number of UEs" thresholds for different NPN identifiers may be different or may be the same. In this way, the maximum number of UEs of each NPN and/or at least one "number of UEs" threshold may be obtained, to perform access control and/or charging based on a number of terminals accessing a network.

In some embodiments, the fifth network element may include, but not limited to, an OAM unit. For example, the CHF may statically configure a maximum number of UEs for an NPN identifier and/or a set of "number of UEs" thresholds under the maximum number of UEs, or may obtain, from the OAM unit according to an NPN identifier, a maximum number of UEs for the NPN identifier and/or a set of "number of UEs" thresholds under the maximum number of UEs.

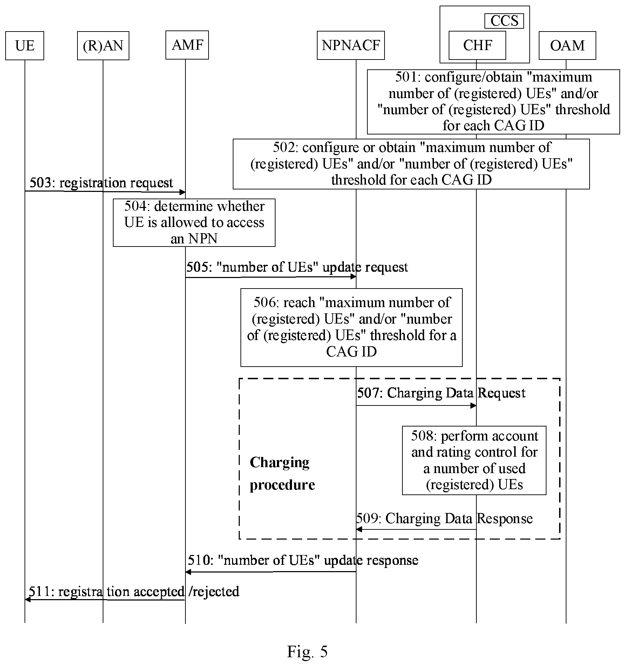

An access control and charging process according to an embodiment of the present disclosure is described below with reference to Fig. 5.

In the embodiments of the present disclosure, for example, an NPN is a PNI-NPN. The access control and charging process may include the following steps.

S501 includes: statically configuring, by a CHF, or obtaining, from an OAM unit, an associated maximum number of (registered) UEs and/or a set of "number of (registered) UEs" thresholds under the maximum number of UEs for each CAG identifier, where the maximum number of (registered) UEs corresponds to a maximum value of a number of (registered) UEs. A number of UEs may be referred to as a number of terminals.

S502 includes: statically configuring, by an NPNACF or an NSACF (an NPNACF is used as an example for description in Fig. 5), or obtaining, from the OAM unit, an associated maximum number of (registered) UEs and/or a set of "number of (registered) UEs" thresholds under the maximum number of UEs per CAG identifier, where the different "number of (registered) UEs" thresholds correspond to different charging levels for the numbers of UEs.

S503 includes: sending, by UE, a registration request to an AMF through a RAN.

S504 includes: determining, by the AMF, whether the UE is allowed to access the NPN.

S505 includes: if the UE is allowed to access the NPN, sending, by the AMF, a first request message to the NPNACF or NSACF, where the first request message is, for example, a "number of UEs" update request message (for example, Nnpnacf_NPNAC_NumOfUEsUpdate_Request, or Nnsacf_NSAC_NumOfUEsUpdate_Request, or NumOfUEsUpdate_Request) and may include at least one CAG identifier and second indication information (for example, an update flag), and the like, and the second indication information is used for indicating to increase or decrease a number of UEs of each CAG.

S506 includes: checking, by the NPNACF or NSACF, whether a number of (registered) UEs for each CAG identifier reaches a corresponding maximum number of (registered) UEs or "number of (registered) UEs" threshold, updating a number of UEs that does not reach a corresponding maximum number of (registered) UEs and is for a CAG identifier, and makes a response to the AMF.

If a number of (registered) UEs for any CAG identifier is increased to a corresponding "number of (registered) UEs" threshold or maximum number of (registered) UEs or decreased to the corresponding "number of (registered) UEs" threshold, S507 to S509 are performed to trigger a charging procedure to implement "number of (registered) UEs"-based level charging per CAG identifier.

S507 includes: optionally, sending, by the NPNACF or NSACF, a second request message to the CHF, where the second request message is, for example, a charging data request message and may include a specific CAG identifier and a number of used (registered) UEs. A number of (registered) UEs for the specific CAG identifier is increased to a corresponding "number of (registered) UEs" threshold or maximum number of (registered) UEs or decreased to the corresponding "number of (registered) UEs" threshold.

For example, the NPNACF or NSACF may call converged charging, for example, an Nchf_NPNConvergedCharging service, to send the second request message, to report a number of used (registered) UEs.

S508 includes: performing, by the CHF, account and rating control based on the number of (registered) UEs for the specific CAG identifier, that is, performing account and rating control for the number of used or registered UEs. For example, the CHF may transparently transmit the received second request message to a charging system, for example, a CCS, and the CCS performs charging based on the received second request message and level information.

S509: returning, by the CHF, a second response message to the NPNACF or NSACF, where the second response message is, for example, a charging data response message.

S510: returning, by the NPNACF or NSACF, a first response message to the AMF, where the first response message is, for example, a "number of UEs" update response message (for example, Nnpnacf_NPNAC_NumOfUEsUpdate_Response, or Nnsacf_NSAC_NumOfUEsUpdate_Response, or NumOfUEsUpdate_Response) and may include first indication information, and the first indication information is used for indicating whether a number of (registered) UEs for each CAG identifier reaches a corresponding maximum number of (registered) UEs.

Optionally, when numbers of (registered) UEs for all CAG identifiers reach corresponding maximum numbers of (registered) UEs, the NPNACF or NSACF notifies the AMF to subsequently no longer accept registration requests that only contain these CAG identifiers, and the AMF will reject subsequent new registration requests that only contain these CAG identifiers.

S511 includes: if it is determined according to the first indication information that numbers of (registered) UEs for no or only some CAG identifiers reach corresponding maximum numbers of (registered) UEs, sending a registration accept message to the UE, and if it is determined according to the first indication information that numbers of (registered) UEs for all CAG identifiers reach corresponding maximum numbers of (registered) UEs, sending a registration accept message to the UE. In this way, access control of a maximum number of (registered) UEs can be implemented per CAG identifier.

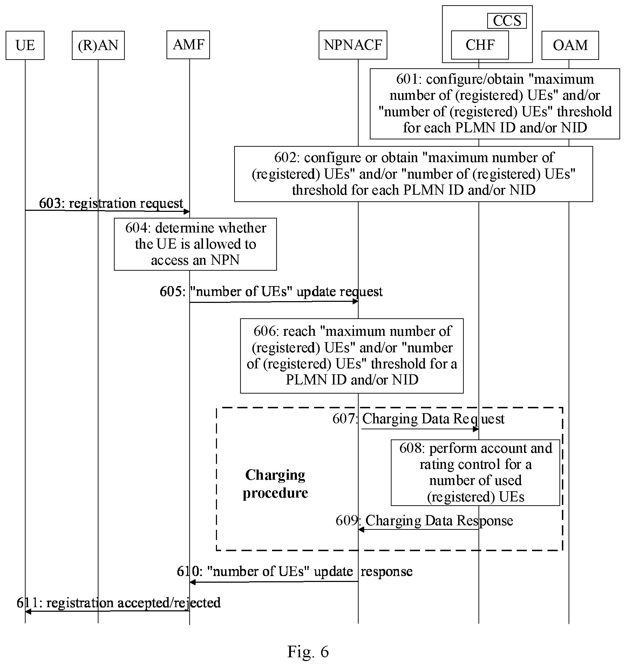

An access control and charging process according to an embodiment of the present disclosure is described below with reference to Fig. 6.

In the embodiments of the present disclosure, for example, an NPN is an SNPN. The access control and charging process may include the following steps.

S601 includes: statically configuring, by a CHF, or obtaining, from an OAM unit, an associated maximum number of (registered) UEs and/or a set of "number of (registered) UEs" thresholds under the maximum number of UEs per PLMN ID or per NID, where the maximum number of (registered) UEs corresponds to a maximum value of a quota of a number of (registered) UEs. A number of UEs may be referred to as a number of terminals.

S602 includes: statically configuring, by an NPNACF or an NSACF (an NPNACF is used as an example for description in Fig. 6), or obtaining, from the OAM unit, an associated maximum number of (registered) UEs and/or a set of "number of (registered) UEs" thresholds under the maximum number of UEs per PLMN ID or per NID, where the different "number of (registered) UEs" thresholds correspond to different charging levels for the numbers of UEs.

S603 includes: sending, by UE, a registration request to an AMF through a RAN.

S604 includes: determining, by the AMF, whether the UE is allowed to access the NPN.

S605 includes: if the UE is allowed to access the NPN, sending, by the AMF, a first request message to the NPNACF or NSACF, where the first request message is, for example, a "number of UEs" update request message (for example, Nnpnacf_NPNAC_NumOfUEsUpdate_Request, or Nnsacf_NSAC_NumOfUEsUpdate_Request, or NumOfUEsUpdate_Request) and may include at least one PLMN ID and/or NID and second indication information (for example, an update flag), and the like, and the second indication information is used for indicating to increase or decrease a number of UEs for each PLMN ID and/or NID.

S606 includes: checking, by the NPNACF or NSACF, whether a number of (registered) UEs for each PLMN ID and/or NID reaches a corresponding maximum number of (registered) UEs or "number of (registered) UEs" threshold, updating a number of UEs that does not reach a corresponding maximum number of (registered) UEs and is for a PLMN ID and/or NID, and makes a response to the AMF.

If a number of (registered) UEs for any PLMN ID and/or NID is increased to a corresponding "number of (registered) UEs" threshold or maximum number of (registered) UEs or decreased to the corresponding "number of (registered) UEs" threshold, S607 to S609 are performed to trigger a charging procedure to implement "number of (registered) UEs"-based level charging per PLMN ID and/or per NID.

S607 includes: optionally, sending, by the NPNACF or NSACF, a second request message to the CHF, where the second request message is, for example, a charging data request message and may include a specific PLMN ID and/or NID and a number of used (registered) UEs. A number of (registered) UEs for the specific PLMN ID and/or NID is increased to a corresponding "number of (registered) UEs" threshold or maximum number of (registered) UEs or decreased to the corresponding "number of (registered) UEs" threshold.

For example, the NPNACF or NSACF may call converged charging, for example, an Nchf_NPNConvergedCharging service, to send the second request message, to report a number of used (registered) UEs.

S608 includes: performing, by the CHF, account and rating control based on the number of used (registered) UEs for the specific PLMN ID and/or NID, that is, performing account and rating control for the number of used or registered UEs. For example, the CHF may transparently transmit the received second request message to a charging system, for example, a CCS, and the CCS performs charging based on the received second request message and level information.

S609: returning, by the CHF, a second response message to the NPNACF or NSACF, where the second response message is, for example, a charging data response message.

S610: returning, by the NPNACF or NSACF, a first response message to the AMF, where the first response message is, for example, a "number of UEs" update response message (for example, Nnpnacf_NPNAC_NumOfUEsUpdate_Response, or Nnsacf_NSAC_NumOfUEsUpdate_Response, or NumOfUEsUpdate_Response) and may include first indication information, and the first indication information is used for indicating whether a number of (registered) UEs for each PLMN ID and/or NID reaches a corresponding maximum number of (registered) UEs.

Optionally, when numbers of (registered) UEs for all PLMN IDs and/or NIDs reach corresponding maximum numbers of (registered) UEs, the NPNACF or NSACF notifies the AMF to subsequently no longer accept registration requests that only contain these PLMN IDs and/or NIDs, and the AMF will reject subsequent new registration requests that only contain these PLMN IDs and/or NIDs.

S611 includes: if it is determined according to the first indication information that numbers of (registered) UEs for no or only some PLMN IDs and/or NIDs reach corresponding maximum numbers of (registered) UEs, sending a registration accept message to the UE, and if it is determined according to the first indication information that numbers of (registered) UEs for all PLMN IDs and/or NIDs reach corresponding maximum numbers of (registered) UEs, sending a registration accept message to the UE. In this way, access control of a maximum number of (registered) UEs can be implemented per PLMN ID and/or per NID.

For an access control method provided in the embodiments of the present disclosure, an execution object may be an access control apparatus. An example in which an access control apparatus performs an access control method is used in the embodiments of the present disclosure to describe the access control apparatus provided in the embodiments of the present disclosure.

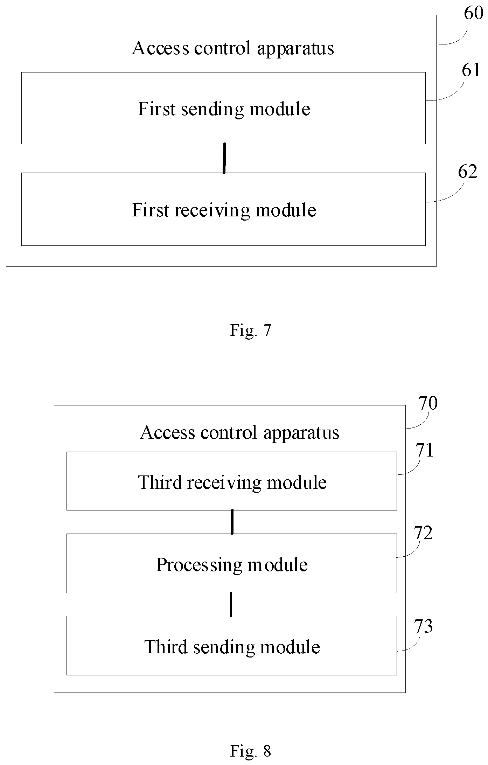

Refer to Fig. 7. Fig. 7 is a schematic structural diagram of an access control apparatus according to an embodiment of the present disclosure. The apparatus is applied to a first network element. The first network element includes, but not limited to, an AMF, and the like. As shown in Fig. 7, an access control apparatus 60 includes:
a first sending module 61, configured to send a first request message to a second network element, where the first request message includes at least one NPN identifier and is used for requesting to update a number of UEs for each NPN identifier; and
a first receiving module 62, configured to receive a first response message from the second network element, where the first response message includes first indication information, and the first indication information is used for indicating whether the number of UEs for each NPN identifier reaches the corresponding first value.

Optionally, the first value is a maximum number of UEs for a corresponding NPN identifier.

Optionally, the access control apparatus 60 further includes:
a second receiving module, configured to receive a registration request message or a deregistration request message from a terminal,
where the first sending module 61 is further configured to: in a case that it is determined that the terminal is allowed to access the NPN, send the first request message to the second network element.

Optionally, the access control apparatus 60 further includes:
a second sending module, configured to: in a case that the first indication information indicates that the numbers of UEs for some or all NPN identifiers of the at least one NPN identifier do not reach corresponding first values, send a registration accept message to the terminal; or, in a case that the first indication information indicates that a number of UEs for each NPN identifier reaches a corresponding first value, send a registration reject message to the terminal.

Optionally, the access control apparatus 60 includes:
a rejection module, configured to: in a case that a number of UEs for each NPN identifier reaches a corresponding first value, reject a subsequent registration request message for an NPN corresponding to each NPN identifier.

Optionally, each NPN identifier is determined by the first network element from terminal subscription data obtained from a third network element and/or an NPN identifier list that is obtained from a RAN and is supported by a cell.

Optionally, the first request message further includes at least one of the following:
a terminal identifier, or second indication information, where the second indication information is used for indicating to increasing or decreasing a number of UEs for each NPN identifier.

Optionally, the at least one NPN identifier includes at least one of the following:
one or more CAG identifiers;
one or more NIDs; or
one or more PLMN IDs.

It may be understood that the access control apparatus 60 in the embodiments of the present disclosure may implement various processes in the method embodiment shown in Fig. 1 and can achieve the same technical effects. To avoid repetition, details are not described herein again.

Refer to Fig. 8. Fig. 8 is a schematic structural diagram of an access control apparatus according to an embodiment of the present disclosure. The apparatus is applied to a second network element. The second network element includes, but not limited to, an NPNACF, an NSACF, and the like. As shown in Fig. 8, an access control apparatus 70 includes:
a third receiving module 71, configured to receive a first request message from a first network element, where the first request message includes at least one NPN identifier and is used for requesting to update a number of UEs for each NPN identifier;
a processing module 72, configured to check whether the number of UEs for each NPN identifier reaches a corresponding first value, and update the number of UEs for an NPN identifier that does not reach the corresponding first value; and
a third sending module 73, configured to send a first response message to the first network element, where the first response message includes first indication information, and the first indication information is used for indicating whether the number of UEs for each NPN identifier reaches the corresponding first value.

Optionally, the first value is a maximum number of UEs for a corresponding NPN identifier.

Optionally, the access control apparatus 70 further includes:
a fourth sending module, configured to: when a number of UEs for a first NPN identifier reaches a corresponding first value or second value, send a second request message to a fourth network element, where the second request message is used for reporting the number of UEs for the first NPN identifier, the fourth network element performs charging based on the number of UEs for the first NPN identifier, the first NPN identifier is any NPN identifier of the at least one NPN identifier, the first value is a maximum number of UEs for the first NPN identifier, the first value is greater than the second value, and the second value is any one of "number of UEs" thresholds for the first NPN identifier; and
a fourth receiving module, configured to receive a second response message from the fourth network element.

Optionally, the second request message includes at least one of the following:
a first NPN identifier, or a number of UEs for the first NPN identifier.

Optionally, the access control apparatus 70 further includes:
a first execution module, configured to perform at least one of the following:
configuring a maximum number of UEs for each NPN identifier and/or at least one "number of UEs" threshold under the maximum number of UEs; or
obtaining, according to each NPN identifier, a maximum number of UEs for each NPN identifier and/or at least one "number of UEs" threshold under the maximum number of UEs from a fifth network element.

Optionally, the at least one NPN identifier includes at least one of the following:
one or more CAG identifiers;
one or more NIDs; or
one or more PLMN IDs.

It may be understood that the access control apparatus 70 in the embodiments of the present disclosure may implement various processes in the method embodiment shown in Fig. 2 and can achieve the same technical effects. To avoid repetition, details are not described herein again.

For a charging method provided in the embodiments of the present disclosure, an execution object may be a charging apparatus. An example in which a charging apparatus performs a charging method is used in the embodiments of the present disclosure to describe the charging apparatus provided in the embodiments of the present disclosure.

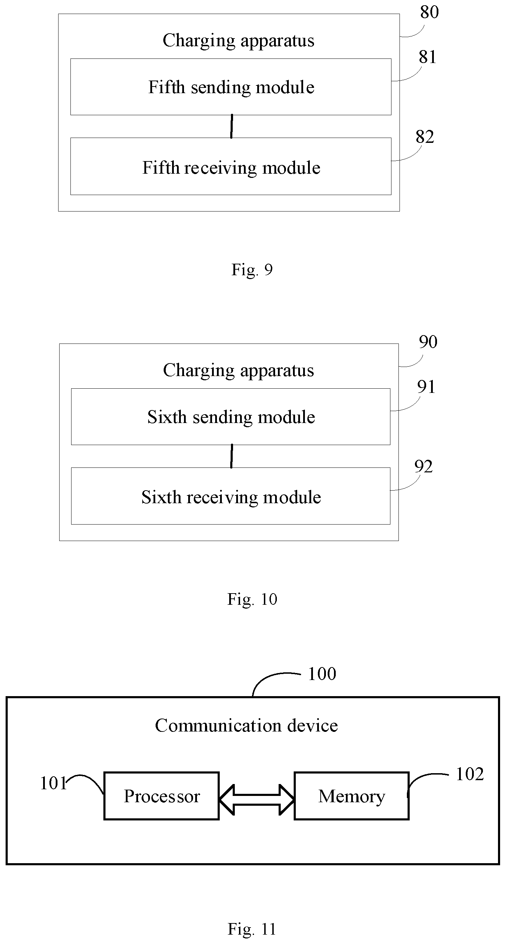

Refer to Fig. 9. Fig. 9 is a schematic structural diagram of a charging apparatus according to an embodiment of the present disclosure. The apparatus is applied to a second network element. The second network element includes, but not limited to, an NPNACF, an NSACF, and the like. As shown in Fig. 9, a charging apparatus 80 includes:
a fifth sending module 81, configured to: when a number of UEs for a first NPN identifier reaches a corresponding first value or second value, send a second request message to a fourth network element, where the second request message is used for reporting the number of UEs for the first NPN identifier, the fourth network element performs charging based on the number of UEs for the first NPN identifier, the first value is a maximum number of UEs for the first NPN identifier, the first value is greater than the second value, and the second value is any one of "number of UEs" thresholds for the first NPN identifier; and
a fifth receiving module 82, configured to receive a second response message from the fourth network element.

Optionally, the second request message includes at least one of the following:
a first NPN identifier, or a number of UEs for the first NPN identifier.

Optionally, the charging apparatus 80 includes:
a second execution module, configured to perform at least one of the following:
configuring a maximum number of UEs for each NPN identifier and/or at least one "number of UEs" threshold under the maximum number of UEs; or
obtaining, according to each NPN identifier, a maximum number of UEs for each NPN identifier and/or at least one "number of UEs" threshold under the maximum number of UEs from a fifth network element.

It may be understood that the charging apparatus 80 in the embodiments of the present disclosure may implement various processes in the method embodiment shown in Fig. 3 and can achieve the same technical effects. To avoid repetition, details are not described herein again.

Refer to Fig. 10. Fig. 10 is a schematic structural diagram of a charging apparatus according to an embodiment of the present disclosure. The apparatus is applied to a fourth network element. The fourth network element includes, but not limited to, a CHF, and the like. As shown in Fig. 10, a charging apparatus 90 includes:
a sixth receiving module 91, configured to: when a number of UEs for a first NPN identifier reaches a corresponding first value or second value, receive a second request message from a second network element, where the second request message is used for reporting the number of UEs for the first NPN identifier, the fourth network element performs charging based on the number of UEs for the first NPN identifier, the first value is a maximum number of UEs for the first NPN identifier, the first value is greater than the second value, and the second value is any one of "number of UEs" thresholds for the first NPN identifier; and
a sixth sending module 92, configured to send a second response message to the second network element.

Optionally, the second request message includes at least one of the following:
a first NPN identifier, or a number of UEs for the first NPN identifier.

Optionally, the charging apparatus 90 includes:
a third execution module, configured to perform at least one of the following:
configuring a maximum number of UEs for each NPN identifier and/or at least one "number of UEs" threshold under the maximum number of UEs; or
obtaining, according to each NPN identifier, a maximum number of UEs for each NPN identifier and at least one "number of UEs" threshold under the maximum number of UEs from a fifth network element.

It may be understood that the charging apparatus 90 in the embodiments of the present disclosure may implement various processes in the method embodiment shown in Fig. 4 and can achieve the same technical effects. To avoid repetition, details are not described herein again.

In addition, as shown in Fig. 11, the present disclosure further provides in some embodiments a communication device 100, including a processor 101 and a memory 102. The memory 102 stores a program or instructions executable on the processor 101. For example, when the communication device 100 is a first network element, the program or instructions are configured to be executed by the processor 101 to implement various steps in the foregoing method embodiment shown in Fig. 1, and can achieve the same technical effects. When the communication device 100 is a second network element, the program or instructions are configured to be executed by the processor 101 to implement various steps in the foregoing method embodiment shown in Fig. 2, or implement various steps in the foregoing method embodiment shown in Fig. 3, and can achieve the same technical effects. When the communication device 100 is a fourth network element, the program or instructions are configured to be executed by the processor 101 to implement various steps in the foregoing method embodiment shown in Fig. 4, and can achieve the same technical effects. To avoid repetition, details are not described herein again.

The present disclosure further provides in some embodiments a readable storage medium, storing therein a program or instructions. The program or instructions are configured to be executed by a processor to implement various processes of the foregoing embodiment of the access control method, or implement various processes of the foregoing embodiment of the charging method, and can achieve the same technical effects. To avoid repetition, details are not described herein again.

Computer-readable media include permanent and non-permanent, removable and non-removable media, and can implement storage of information by using any method or technology. The information may be computer-readable instructions, data structures, modules of a program, or other data. Examples of computer storage media include, but are not limited to, a phase-change random access memory (PRAM), a static RAM (SRAM), a dynamic RAM (DRAM), another type of RAM, a read-only memory (ROM), an electrically erasable programmable ROM (EEPROM), a flash memory or another memory technology, a compact disc ROM (CD-ROM), a digital versatile disc (DVD) or another optical storage, a magnetic cartridge tape, a magnetic tape magnetic disk storage or another magnetic storage device or any other non-transfer medium that can be used to store information that is accessible by a computing device. As defined herein, the computer-readable media do not include transitory computer-readable media, for example, modulated data signals and carriers.

It is to be noted that, the terms "include", "comprise" or any variants thereof herein are intended to cover non-exclusive inclusion, such that a process, a method, an article or a device comprising a series of elements comprise not only those elements, but also other elements not listed explicitly, or elements inherent to this process, method, article or device. An element defined by a statement "comprising one" do not preclude the presence of another identical element in the process, method, article or device comprising this element, without more limitations.

The above sequence numbers of the examples of the present disclosure are only for description, and do not represent advantages or disadvantages of the examples.

Based on the description of the implementations, persons skilled in the art may clearly understand that the methods in the embodiments may be implemented by using software plus a necessary universal hardware platform, and certainly may be implemented by hardware, the former being the preferred implementations in many cases. Based on such an understanding, the technical solutions of the present disclosure essentially, or the part contributing to the related art may be implemented in the form of a software product. The computer software product may be stored in a storage medium (for example, a ROM/RAM, a magnetic disk or an optical disc), and includes several instructions for instructing a service classification device (which may be a mobile phone, a computer, a server, an air conditioner or a network device) to perform the methods in the embodiments of the present disclosure.

The foregoing descriptions are only preferred implementation manners of the present disclosure. It should be noted that for a person of ordinary skill in the art, several improvements and modifications may further be made without departing from the principle of the present disclosure. These improvements and modifications should also be deemed as falling within the protection scope of the present disclosure.

## Claims

1. An access control method, performed by a first network element, the method comprising:
sending a first request message to a second network element, wherein the first request message comprises at least one non-public network (NPN) identifier and is used for requesting to update a number of user equipment (UEs) for each NPN identifier; and
receiving a first response message from the second network element, wherein the first response message comprises first indication information, and the first indication information is used for indicating whether the number of UEs for each NPN identifier reaches a corresponding first value.

2. The method according to claim 1, wherein the first value is a maximum number of UEs for a corresponding NPN identifier.

3. The method according to claim 1, wherein before the sending the first request message to the second network element, the method further comprises:
receiving a registration request message or a deregistration request message from a terminal,
wherein the sending the first request message to the second network element comprises:
in a case that it is determined that the terminal is allowed to access the NPN, sending the first request message to the second network element.

4. The method according to claim 3, wherein in a case that a registration request message is received from the terminal, after the receiving the first response message from the second network element, the method further comprises:
in a case that the first indication information indicates that the numbers of UEs for some or all NPN identifiers of the at least one NPN identifier do not reach corresponding first values, sending a registration accept message to the terminal;
or
in a case that the first indication information indicates that the number of UEs for each NPN identifier reaches a corresponding first value, sending a registration reject message to the terminal.

5. The method according to claim 1, wherein the method further comprises:
in a case that the number of UEs for each NPN identifier reaches a corresponding first value, rejecting a subsequent registration request message for an NPN corresponding to each NPN identifier.

6. The method according to claim 1, wherein each NPN identifier is determined by the first network element from terminal subscription data obtained from a third network element and/or an NPN identifier list that is obtained from a radio access network (RAN) and is supported by a cell.

7. The method according to claim 1, wherein the first request message further comprises at least one of the following:
a terminal identifier, or second indication information, wherein the second indication information is used for indicating to increase or decrease the number of UEs for each NPN identifier.

8. The method according to any one of claims 1 to 7, wherein the at least one NPN identifier comprises at least one of the following:
one or more closed access group (CAG) identifiers (IDs);
one or more network IDs (NIDs); or
one or more public land mobile network (PLMN) IDs.

9. An access control method, performed by a second network element, the method comprising:
receiving a first request message from a first network element, wherein the first request message comprises at least one non-public network (NPN) identifier and is used for requesting to update a number of UEs for each NPN identifier;
checking whether the number of UEs for each NPN identifier reaches a corresponding first value, and updating the number of UEs for an NPN identifier that does not reach the corresponding first value; and
sending a first response message to the first network element, wherein the first response message comprises first indication information, and the first indication information is used for indicating whether the number of UEs for each NPN identifier reaches the corresponding first value.

10. The method according to claim 9, wherein the first value is a maximum number of UEs for a corresponding NPN identifier.

11. The method according to claim 9, wherein the method further comprises:
in a case that a number of UEs for a first NPN identifier reaches the corresponding first value or a second value, sending a second request message to a fourth network element, wherein the second request message is used for reporting the number of UEs for the first NPN identifier, so that the fourth network element performs charging based on the number of UEs for the first NPN identifier, the first NPN identifier is any NPN identifier of the at least one NPN identifier, the first value is a maximum number of UEs for the first NPN identifier, the first value is greater than the second value, and the second value is any one of "number of UEs" thresholds for the first NPN identifier; and
receiving a second response message from the fourth network element.

12. The method according to claim 11, wherein the second request message comprises at least one of the following:
the first NPN identifier; or
the number of UEs for the first NPN identifier.

13. The method according to claim 9, wherein the method further comprises at least one of the following:
configuring a maximum number of UEs for each NPN identifier and/or at least one "number of UEs" threshold under the maximum number of UEs; or
obtaining, from a fifth network element according to each NPN identifier, a maximum number of UEs for each NPN identifier and/or at least one "number of UEs" threshold under the maximum number of UEs.

14. The method according to any one of claims 9 to 13, wherein the at least one NPN identifier comprises at least one of the following:
one or more closed access group (CAG) identifiers (IDs);
one or more network NIDs; or
one or more public land mobile network (PLMN) IDs.

15. A charging method, performed by a second network element, the method comprising:
in a case that a number of UEs for a first non-public network (NPN) identifier reaches a corresponding first value or a second value, sending a second request message to a fourth network element, wherein the second request message is used for reporting the number of UEs for the first NPN identifier, so that the fourth network element performs charging based on the number of UEs for the first NPN identifier, the first value is a maximum number of UEs for the first NPN identifier, the first value is greater than the second value, and the second value is any one of "number of UEs" thresholds for the first NPN identifier; and
receiving a second response message from the fourth network element.

16. The method according to claim 15, wherein the second request message comprises at least one of the following:
the first NPN identifier; or
the number of UEs for the first NPN identifier.

17. The method according to claim 15, wherein the method further comprises at least one of the following:
configuring a maximum number of UEs for each NPN identifier and/or at least one "number of UEs" threshold under the maximum number of UEs; or
obtaining, from a fifth network element according to each NPN identifier, a maximum number of UEs for each NPN identifier and/or at least one "number of UEs" threshold under the maximum number of UEs.

18. A charging method, performed by a fourth network element, the method comprising:
in a case that a number of UEs for a first non-public network (NPN) identifier reaches a corresponding first value or a second value, receiving a second request message from a second network element, wherein the second request message is used for reporting the number of UEs for the first NPN identifier, so that the fourth network element performs charging based on the number of UEs for the first NPN identifier, the first value is a maximum number of UEs for the first NPN identifier, the first value is greater than the second value, and the second value is any one of "number of UEs" thresholds for the first NPN identifier; and
sending a second response message to the second network element.

19. The method according to claim 18, wherein the second request message comprises at least one of the following:
the first NPN identifier; or
the number of UEs for the first NPN identifier.

20. The method according to claim 18, wherein the method further comprises at least one of the following:
configuring a maximum number of UEs for each NPN identifier and/or at least one "number of UEs" threshold under the maximum number of UEs; or
obtaining, from a fifth network element according to each NPN identifier, a maximum number of UEs for each NPN identifier and/or at least one "number of UEs" threshold under the maximum number of UEs.

21. An access control apparatus, applied to a first network element, the apparatus comprising:
a first sending module, configured to send a first request message to a second network element, wherein the first request message comprises at least one non-public network (NPN) identifier and is used for requesting to update a number of UEs for each NPN identifier; and
a first receiving module, configured to receive a first response message from the second network element, wherein the first response message comprises first indication information, and the first indication information is used for indicating whether the number of UEs for each NPN identifier reaches a corresponding first value.

22. An access control apparatus, applied to a second network element, the apparatus comprising:
a third receiving module, configured to receive a first request message from a first network element, wherein the first request message comprises at least one non-public network (NPN) identifier and is used for requesting to update a number of UEs for each NPN identifier;
a processing module, configured to check whether the number of UEs for each NPN identifier reaches a corresponding first value, and update the number of UEs for an NPN identifier that does not reach the corresponding first value; and
a third sending module, configured to send a first response message to the first network element, wherein the first response message comprises first indication information, and the first indication information is used for indicating whether the number of UEs for each NPN identifier reaches the corresponding first value.

23. A charging apparatus, applied to a second network element, the apparatus comprising:
a fifth sending module, configured to: in a case that a number of UEs for a first non-public network (NPN) identifier reaches a corresponding first value or a second value, send a second request message to a fourth network element, wherein the second request message is used for reporting the number of UEs for the first NPN identifier, so that the fourth network element performs charging based on the number of UEs for the first NPN identifier, the first value is a maximum number of UEs for the first NPN identifier, the first value is greater than the second value, and the second value is any one of "number of UEs" thresholds for the first NPN identifier; and
a fifth receiving module, configured to receive a second response message from the fourth network element.

24. A charging apparatus, applied to a fourth network element, the apparatus comprising:
a sixth receiving module, configured to: in a case that a number of UEs for a first non-public network (NPN) identifier reaches a corresponding first value or a second value, receive a second request message from a second network element, wherein the second request message is used for reporting the number of UEs for the first NPN identifier, so that the fourth network element performs charging based on the number of UEs for the first NPN identifier, the first value is a maximum number of UEs for the first NPN identifier, the first value is greater than the second value, and the second value is any one of "number of UEs" thresholds for the first NPN identifier; and
a sixth sending module, configured to send a second response message to the second network element.

25. A communication device, comprising a processor, a memory, and a program or instructions stored in the memory and executable by the processor, wherein the program or instructions, when being executed by the processor, implement the steps of the access control method according to any one of claims 1 to 8, or the steps of the access control method according to any one of claims 9 to 14, or the steps of the charging method according to any one of claims 15 to 17, or the steps of the charging method according to any one of claims 18 to 20.

26. A readable storage medium, wherein the readable storage medium stores a program or instructions, and the program or instructions, when being executed by a processor, implement the steps of the access control method according to any one of claims 1 to 8, or the steps of the access control method according to any one of claims 9 to 14, or the steps of the charging method according to any one of claims 15 to 17, or the steps of the charging method according to any one of claims 18 to 20.
